# EUROPÄISCHE PATENTSCHRIFT

(11) **EP 1 570 972 B1**
(45) Veröffentlichungstag und Bekanntmachung des Hinweises auf die Patenterteilung: **28.03.2007**
(21) Anmeldenummer: 05003006.3
(22) Anmeldetag: 12.02.2005
(51) Int. Cl.: B29C 51/26, B29C 51/44

(54) **Thermoformmaschine mit Zwischenspeicher und Verfahren zum Betreiben selbiger**
Thermoforming machine with buffer and process for handling the same
Machine de thermoformage avec tampon intermédiaire et procédé d'utilisation

(30) Priorität: 06.03.2004 DE 102004011002
(43) Veröffentlichungstag der Anmeldung: 07.09.2005
(73) Patentinhaber: Gabler Thermoform GmbH & Co. KG, 23568 Lübeck (DE)
(72) Erfinder: Rowedder, Axel, 23623 Ahrensbök (DE)
(74) Vertreter: Grosse, Wolf-Dietrich Rüdiger

(56) Entgegenhaltungen:
- EP-A- 0 995 581
- EP-A- 1 000 887
- DE-A1- 3 346 628
- DE-A1- 10 256 141

## Beschreibung

Die Erfindung betrifft ein Verfahren zum Betreiben einer Thermoformmaschine zum Formen von stapelfähigen Artikeln aus Kunststoff, bei dem in einem Werkzeug gefertigte Artikel mit einem Entformelement aus dem Werkzeug entfernt und einer nachgeschalteten Stapel- und Zählvorrichtung zugeführt werden, wobei die Stapel- und Zählvorrichtung eine Fangplatte, mittels der der Abtransport der gefertigten Artikel von der Thermoformmaschine erfolgt, sowie einen Stapelkorb zur Aufnahme gestapelter Artikel vor deren Abtransport aus der Stapel- und Zählvorrichtung aufweist. Des weiteren betrifft die Erfindung eine Thermoformmaschine mit einer nachgeschalteten Stapel- und Zählvorrichtung.

Ein Verfahren zum Betreiben einer Thermoformmaschine der gattungsgemäßen Art ist aus der DE 198 48 628 C2 bekannt. Dort werden zwischen den relativ zueinander beweglichen Teilen eines Werkzeugs Kunststoffartikel (beispielsweise Margarineschalen, Trinkbecher, Behälterdeckel) aus thermoplastischen Kunststofffolien und Verbundfolien produziert. Dabei werden in der geschlossenen Stellung des aus Ober- und Unter-Werkzeug bestehenden Werkzeugs die Artikel geformt, dann gestanzt und dann bei geöffneter Stellung des Werkzeugs aus diesem heraus und in eine nachgeschaltete Stapel- und Zählvorrichtung gefördert. Das Oberteil des Werkzeugs der Maschine ist an einer starren Querbrücke montiert; das Unterteil des Werkzeugs ist indes höhenbeweglich sowie schwenkbar ausgestaltet. Zum Bewerkstelligen der Schwenkbarkeit des unteren Werkzeugteils besitzt dieses einen Lagerzapfen, dessen Lager in einem vertikal geführten Führungsstück angeordnet ist.

Damit die Artikel beim Abstapeln nicht gegen Störkanten des Werkzeugs geraten (beispielsweise im Bereich des Folientransportes), ist für das ausschwenkbare Unterteil des Werkzeugs ein großer Schwenkwinkel von typischerweise 80° erforderlich. Die in der ausgeschwenkten Werkzeugendlage aus der Maschine mittels Entformelementen ausgestoßenen Artikel werden von der dem gekippten Unterteil des Werkzeugs entgegenfahrenden bzw. der dem Unterteil des Werkzeugs zugestellten Fangplatte aufgenommen, um ein reproduzierbares Einstapeln zu ermöglichen. Das Bewegen der Fangplatte abwechselnd auf die Maschine zu und von dieser weg ist erforderlich, um aus dem Störradius bzw. Störbereich im Schwenkweg des Werkzeug-Unterteils zu gelangen.

Während des Einstapelns gefertigter Artikel von der Thermoformmaschine in die Stapel- und Zählvorrichtung steht das untere Teil des Werkzeugs, d. h. es wird kein Hub und keine Schwenkbewegung ausgeführt. Nach dem Einstapelvorgang wird das Werkzeugunterteil wieder in die vertikale Position zurückgeschwenkt und vertikal in die Position zurückverfahren, in der es mit dem Oberteil des Werkzeugs zusammenwirkt. Bekannt ist es dabei, die Thermoformmaschine so zu betreiben, dass für das Zustellen und das Wegfahren der Fangplatte und zum Bewegen des vertikal bewegbaren und schwenkbaren Werkzeugteils eine Synchronisationsbewegung erfolgt, um die Zykluszeit der Maschine möglichst gering zu halten. Grundsätzlich wird dabei angestrebt, dass die Zykluszeiten zum Verfahren des Werkzeugunterteils, also für dessen Translation und Schwenkbewegung, sowie der Fangplatte und des Entformelements möglichst gering werden, um die Ausstoßleistung der Anlage zu maximieren.

Um ein prozesssicheres Einstapeln bzw. eine prozesssichere Stapelbildung in der Stapel- und Zählvorrichtung zu ermöglichen, sind verschiedene Lösungen bekannt geworden, die die Gestaltung der Fangplatte und deren Verschiebung bzw. Bewegung betreffen.

Aus der bereits genannten DE 198 48 628 C2 ist ein Verfahren zum Bewegen der Fangplatte bekannt, bei dem diese synchronisiert mit der Bewegung des schwenkbaren Werkzeugunterteils verfahren wird. Wie bereits erläutert, muss die Fangplatte dabei möglichst rasch aus dem Störbereich herausgefahren werden, der durch die Schwenkbewegung des Werkzeugs bedingt ist. Es wird dort daher der Verfahrweg der Fangplatte über den Störradius des Schwenkweges des Werkzeugunterteils hinaus verlängert, wobei die dem Störradius entsprechende erste Wegstrecke der Fangplatte beim Wegfahren derselben mit hoher Beschleunigung bzw. beim Zurückstellen mit hoher Verzögerung zurückgelegt wird und wobei die zweite, verlängerte Wegstrecke mit kleineren Werten für die Beschleunigung bzw. Verzögerung durchfahren wird. Damit wird erreicht, dass die auf den Artikelstapel wirkenden Beschleunigungskräfte immer kleiner als die Reibkräfte zwischen dem Artikelstapel und dessen Auflage sind, so dass ein Auseinanderfallen des Stapels durch die Verfahrdynamik ausgeschlossen werden kann.

Aus der DE 100 04 553 A1 ist eine Thermoformmaschine mit nachgeschalteter Stapel- und Zählvorrichtung bekannt, die eine Fangplatte aufweist, wobei an dieser Artikel-Haltemittel vorgesehen sind, die als Haltefedern ausgebildet und mit einem solchen Stichmaß voneinander beabstandet sind, bei dem der eingestapelte Artikel lose zwischen komplementären Ausnehmungen der Haltefedern aufgenommen ist. Aus der DE 198 48 627 A1 ist es bekannt, dass sich der Fangplatte hinter ihren die Fertigartikel aufnehmenden Ausformungen für jede Artikelstange zwei parallel voneinander beabstandete Stapelstäbe anschließen, die im Bereich des Kopfendes eines aus der Maschine ausgestoßenen Fertigartikels mit federbelasteten Stapelscharnieren versehen sind. Bei beiden genannten Lösungen kann weitestgehend auf Halteelemente für den Artikelstapel verzichtet werden, was deshalb vorteilhaft ist, weil diese zu Problemen beim Entnehmen der Stapel und prinzipiell zu Verformungen der noch etwas weichen Artikel führen können.

Aus der 100 44 228 A1 ist ein Verfahren zum Stapeln von Kunststoffartikeln bekannt, die aus der Thermoformmaschine an die Stapel- und Zählvorrichtung übergeben werden, wobei die sich in den Stapelmagazinen bzw. in der Fangplatte befindlichen Stapel nach dem Einstapeln eines Artikels unter Mitnahme dieses Artikels mittels einer von der Übergabeeinrichtung getrennten Verschiebeeinrichtung um ein Maß verschieben, das größer oder gleich dem Abstandsmaß zwischen den gestapelten Behältern ist. Auch damit soll erreicht werden, dass beim Übergeben von Artikeln in Stapelmagazine oder in eine Fangplatte keine Deformationsgefahr für die Artikel durch das Verschieben des bereits gebildeten Stapels um das Stapelmaß gegeben ist.

Einen bedeutenden Einfluss auf die Stapelbildung hat das maschinenzugehörige Entformelement (Auswerfersystem), durch das die geformten Artikel aus dem Werkzeug in die zugestellte Fangplatte der Stapel- und Zählvorrichtung transportiert werden. Wegen der angestrebten Ausstoßleistung der Thermoformmaschine wird eine kleine Verfahrzeit des Entformelements angestrebt, wobei Verfahrgeschwindigkeiten von 2 m/s und Beschleunigungen bzw. Verzögerungen von 20 m/s² nicht ungewöhnlich sind. Diese Prozessparameter haben jedoch insbesondere bei flachen Behältern, Deckeln usw. folgende Nachteile:

Die Einstapelimpulse bewirken ein Auseinanderfallen bzw. Auseinanderrutschen des Artikelstapels, insbesondere am Stapelanfang. Um diese Auswirkungen zu vermindern, werden zu den entsprechenden Halteelementen (s. die oben beschriebenen Lösungen im Stand der Technik) Klemmelemente eingesetzt. Insbesondere bei dünnwandigen Artikeln besteht jedoch durch die Einstapelimpulse die Gefahr der Verformung des zuletzt und des zuvor gestapelten Artikels.

Die bekannten Verfahren zum Betreiben einer Thermoformmaschine mit nachgeschalteter Stapel- und Zählvorrichtung haben daher übereinstimmend die nachteiligen Eigenschaften, dass das Einstapeln der gefertigten Artikel unter beachtlichen Massenkräften erfolgt, was die Prozesssicherheit des Verfahren negativ beeinträchtigt. Kleinere Einstapelgeschwindigkeiten, die mit geringeren Massenkräften einhergehen würden, verbieten sich aufgrund ökonomischer Überlegungen, die eine schnelle Bewegung der gefertigten Artikel fordern.

Der Erfindung liegt daher die Aufgabe zugrunde, ein Verfahren zum Betreiben einer Thermoformmaschine mit nachgeschalteter Stapel- und Zählvorrichtung sowie eine solche Thermoformmaschine zu schaffen, die die aus dem Stand der Technik bekannten Nachteile nicht mehr aufweist.

Die Lösung dieser Aufgabe durch die Erfindung ist verfahrensgemäß dadurch gekennzeichnet, dass die Fangplatte im Werkzeug gefertigte Artikel einem Zwischenpuffer, insbesondere einem einzigen Zwischenpuffer, zuführt, in dem eine Anzahl gestapelter Artikel angesammelt werden, und dass eine im Zwischenpuffer gewünschte Anzahl gestapelter Artikel intermittierend vom Zwischenpuffer in den Stapelkorb verbracht oder transportiert wird.

Bevorzugt ist dabei vorgesehen, dass die Fangplatte jeweils nur die in einem einzigen Fertigungszyklus der Thermoformmaschine hergestellten Artikel dem Zwischenpuffer zuführt.

Eine Weiterbildung sieht vor, dass vor dem Entfernen des Artikels aus dem Werkzeug ein Teil des Werkzeugs, insbesondere ein Unterwerkzeugteil, um einen vorgegebenen Winkel in eine der Fangplatte zugestellte Position geschwenkt wird. Hiernach kommt also das beschriebene Verfahren mit schwenkbarem Werkzeugunterteil zum Einsatz. Dabei ist mit Vorteil vorgesehen, dass die Bewegung der Fangplatte zur Öffnungs- und Schließhubbewegung des Werkzeugs sowie zur Schwenkbewegung des einen Teils des Werkzeugs synchronisiert erfolgt, wie es als solches im Stand der Technik bekannt ist.

Das Auftreten höherer Massenkräfte wird weiterbildungsgemäß dadurch verhindert, dass die Bewegung der Fangplatte von der dem Werkzeug zugeordneten Position zu der dem Zwischenpuffer zugeordneten Position aus zwei Bewegungsabschnitten besteht, die durch unterschiedliche, vorzugsweise jeweils konstante, Beschleunigungen bzw. Verzögerungen gekennzeichnet sind.

Die Thermoformmaschine mit einer nachgeschalteten Stapel- und Zählvorrichtung zum Formen und Abtransportieren von stapelfähigen Artikeln aus Kunststoff ist so ausgestaltet, dass die Thermoformmaschine ein Werkzeug aufweist, das mit einem Entformelement für gefertigte Artikel aus dem Werkzeug versehen ist; die Stapel- und Zählvorrichtung weist eine Fangplatte auf, mit der gefertigte Artikel aus der Thermoformmaschine abgeführt werden können, sowie einen Stapelkorb, der zur Aufnahme einer Anzahl gestapelter Artikel geeignet ist. Erfindungsgemäß ist diese Thermoformmaschine gekennzeichnet durch einen Zwischenpuffer, insbesondere durch einen einzigen Zwischenpuffer, für die Aufnahme einer Anzahl gestapelter Artikel, der zwischen Fangplatte und Stapelkorb angeordnet ist.

Bevorzugt ist der Zwischenpuffer ortsfest angeordnet, und es sind Bewegungsmittel vorhanden, mit denen die Fangplatte und der Stapelkorb translatorisch bewegt werden können.

Dabei sind mit Vorteil die Fangplatte, der Zwischenpuffer und der Stapelkorb auf einer linearen Bahn angeordnet.

Mit dem erfindungsgemäßen Vorschlag werden verschiedene Vorteile erzielt:

Es ist möglich, eine Entkopplung des hochdynamischen und damit ruckbehafteten Maschinenauswerfersystems vom eigentlichen Einstapelvorgang zu erreichen. Dabei sind keine zusätzliche Antriebsachsen erforderlich. Vielmehr kann der Antrieb der Fangplatten für den Einstapelbetrieb, d. h. für das Einstapeln der Artikel, verwendet werden.

Für den Einstapelvorgang selber sind sehr kleine Einstapelgeschwindigkeiten möglich, was die Stapelbildung vorteilhaft und materialschonend gestaltet. Bei entsprechend kleinen Verzögerungen, die durch die erfindungsgemäße Ausgestaltung möglich werden, sind die Massenkräfte der Artikel kleiner als die Reibkraft zwischen Artikel und Auflage, so dass die Stapelbildung mit hoher Prozesssicherheit erreicht werden kann. Durch eine konstante Verzögerung der Fangplatte ist ein sehr harmonischer Stapelbildungsprozess möglich, wobei durch den ortsfest angeordneten Zwischenpuffer eine statische Stapelbildung erfolgen kann.

Damit wird es möglich, auch besonders schwer zu stapelnde Artikel, wie flache Behälter, Deckel, usw., prozesssicher zu stapeln.

In der Zeichnung ist ein Ausführungsbeispiel der Erfindung dargestellt. Es zeigen:
- Fig. 1: schematisch in der Seitenansicht eine Thermoformmaschine mit nachgeschalteter Stapel- und Zählvorrichtung für abzustapelnde Becher;
- Fig. 2a: den Verlauf des Hubs des beweglichen Werkzeugteils über der Zeit;
- Fig. 2b: den Verlauf des Kippwinkels des beweglichen Werkzeugteils über der Zeit;
- Fig. 2c: den Verlauf des Hubs des Entformelements (Werkzeug-Auswerfer) über der Zeit;
- Fig. 2d: den Verlauf der Geschwindigkeit der Fangplatte über der Zeit gemäß einer ersten Möglichkeit; und
- Fig. 2e: den Verlauf der Geschwindigkeit der Fangplatte über der Zeit gemäß einer verbesserten Möglichkeit.

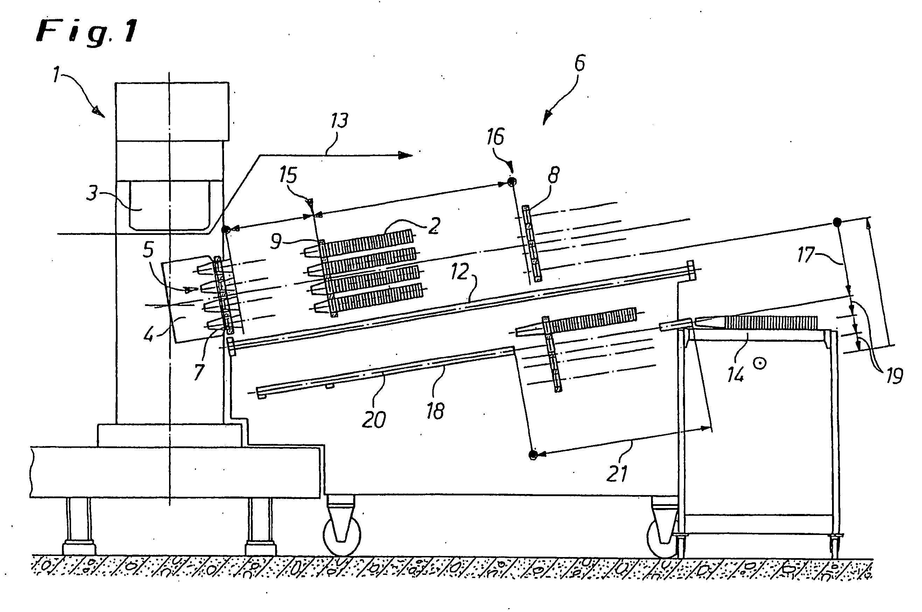

In Fig. 1 ist eine Thermoformmaschine 1 dargestellt, der von der (linken) Seite her ein Kunststoff-Folienband 13 einlaufseitig zugeführt wird, das auslaufseitig gemäß dem eingetragenen Pfeil auf einer nicht dargestellten Wickelrolle wieder aufgewickelt wird. Der Thermoformmaschine 1 ist eine auf Rädern verfahrbare, automatische Stapel- und Zählvorrichtung 6 und dieser wiederum ein Transportband 14 nachgeschaltet.

Die Thermoformmaschine 1 weist ein Werkzeug 3, 4 auf, das zweiteilig ausgebildet ist und aus einem ortsfest angeordneten oberen Werkzeugteil 3 sowie einem relativ zu diesem beweglichen Werkzeugteil 4 besteht. Wie oben erläutert, ist das bewegliche Werkzeugteil 4 translatorisch relativ zum ortsfesten Werkzeugteil 3 beweglich und im übrigen in geöffneter Werkzeugposition verschwenkbar angeordnet, um die Entformung der Artikel 2 zu bewerkstelligen und diese der nachgeschalteten Stapel- und Zählvorrichtung 6 zuzuführen. In Fig. 1 ist das geöffnete Werkzeug 3, 4 mit dem verschwenkten beweglichen Werkzeugkeil 4 gezeigt.

Die Stapel- und Zählvorrichtung 6 hat eine verfahrbar angeordnete Fangplatte 7, die entsprechend der Anzahl der im beweglichen Werkzeugteil 4 der Maschine 1 in über- und nebeneinanderliegenden Reihen vorgesehenen Formnester eine entsprechende Anzahl von Werkzeugkavitäten aufweist, in die die Artikel 2 von einem nur sehr schematisch dargestellten Entformelement 5 ausgebracht bzw. ausgestoßen und dann zu gestapelten Artikelstangen ineinandergestapelt werden.

Die Stapel- und Zählvorrichtung 6 weist weiterhin einen Stapelkorb 8 auf, der die Stangen gestapelter Artikel 2 aufnimmt und von dem aus die Artikelstangen dann auf das Transportband 14 abgegeben werden. Von dort aus können sie einem weiteren Bearbeitungsvorgang zugeführt werden, z. B. einer Bedruckmaschine oder einem Bördelaggregat.

Der Stapelkorb 8 ist zur Abnahme der Artikelstangen in Richtung zur Fangplatte 7 hin bis zu einer Übergabeposition 15 verfahrbar. Nach der Übernahme der Artikelstangen kann der Stapelkorb 8 dann in eine von der Fangplatte 7 entfernte Entladestation 16 verfahren werden. Der Stapelkorb 8 kann aus dieser Position 16 heraus taktweise abgesenkt werden, und zwar zunächst mit einem großen Senkhub 17 soweit, bis die untere Reihe der Artikelstangen in Flucht mit einer Abschiebeeinheit 18 liegt, und danach jeweils mit einem einem Höhenmaß 19 der übereinanderliegenden Reihen von Artikelstangen entsprechenden Hub. Die Abschiebeeinheit 18, die für jede Artikelstange einen Abschieberstab 20 besitzt und in Richtung des Doppelpfeils 21 hin und her bewegbar ist, schiebt die in Teilhüben sukzessive abgesenkten Artikelstangen auf das Transportband 14 über.

Zum Erreichen der oben beschriebenen Vorteile erfolgt die Übergabe der in der Thermoformmaschine 1 gefertigten Artikel 2 von der Fangplatte 7 in den Stapelkorb 8 nicht direkt, sondern über einen Zwischenpuffer 9.

Dabei wird so vorgegangen, dass nach Durchführung eines Prozesszyklus in der Thermoformmaschine 1 die soeben gefertigten Artikel 2 vom Entformelement 5 bei geschwenktem beweglichen Werkzeugteil 4 aus dem Werkzeug 3, 4 abgeschoben und von der Fangplatte 7 übernommen werden. Die Fangplatte 7 transportiert die Artikel 2 dieses einzigen Maschinenzyklus zum Zwischenpuffer 9 und legt sie dort ab, bis sich im Zwischenpuffer 9 eine gewünschte Anzahl gestapelter Artikel 2 befindet. Ist die gewünschte Anzahl erreicht, verfährt der Stapelkorb 8 zur Übergabeposition 15 und übernimmt die Artikelstangen zur weiteren Handhabung wie erläutert.

Während sowohl die Fangplatte 7 als auch der Stapelkorb 8 durch nicht dargestellte Bewegungsmittel entlang einer linearen Bahn 12 beweglich sind, ist der Zwischenpuffer 9 relativ zur Stapel- und Zählvorrichtung 6 ortfest angeordnet. Damit kann erreicht werden, dass das Einstapeln der einzelnen Artikel 2 durch die Fangplatte 7 in den Zwischenpuffer 9 mit sehr kleinen Massenkräften erfolgt, so dass eine quasi statische Stapelbildung erfolgen kann. Hierdurch wird die Prozessstabilität des Verfahrens entscheidend erhöht und die zu handhabenden Artikel werden sehr schonend behandelt. Dies ist insbesondere dann von Bedeutung, wenn zum Erreichen einer möglichst niedrigen Zykluszeit die noch warmen und etwas weichen Artikel 2 zu handhaben bzw. diese sehr dünnwandig ausgebildet sind.

Der am Ende des Verfahrweges der Fangplatte 7 positionierte Zwischenpuffer 9 übernimmt jeden durch die Fangplatte 7 transportierten Artikel 2 eines Fertigungszyklus der Thermoformmaschine 1. Der Zwischenpuffer 9 ist ortsfest angeordnet und wird folglich keiner Bewegung ausgesetzt. Somit kann die Stapelbildung statisch erfolgen.

Die Fangplatte 7 hat einen etwa um den Faktor 8 verlängerten Verfahrweg gegenüber dem, was für die Überbrückung des Störkreises des verschwenkbaren Werkzeugteils 4 erforderlich wäre. Hierdurch wird es einerseits möglich, dass die erforderlichen hohen Beschleunigungen und Geschwindigkeiten innerhalb des Störkreises gefahren werden können, andererseits wird nach dem Verlassen des Störkreises der verbleibende Verfahrweg genutzt, um die hohe Verfahrgeschwindigkeit mit einer kleinen, konstanten Verzögerung abzubremsen. Die Verzögerung ist in jedem Falle so klein, dass die daraus erzeugten Massenkräfte auf den Artikel 2 kleiner sind als die Reibkraft zwischen Artikelrand und Artikelauflage.

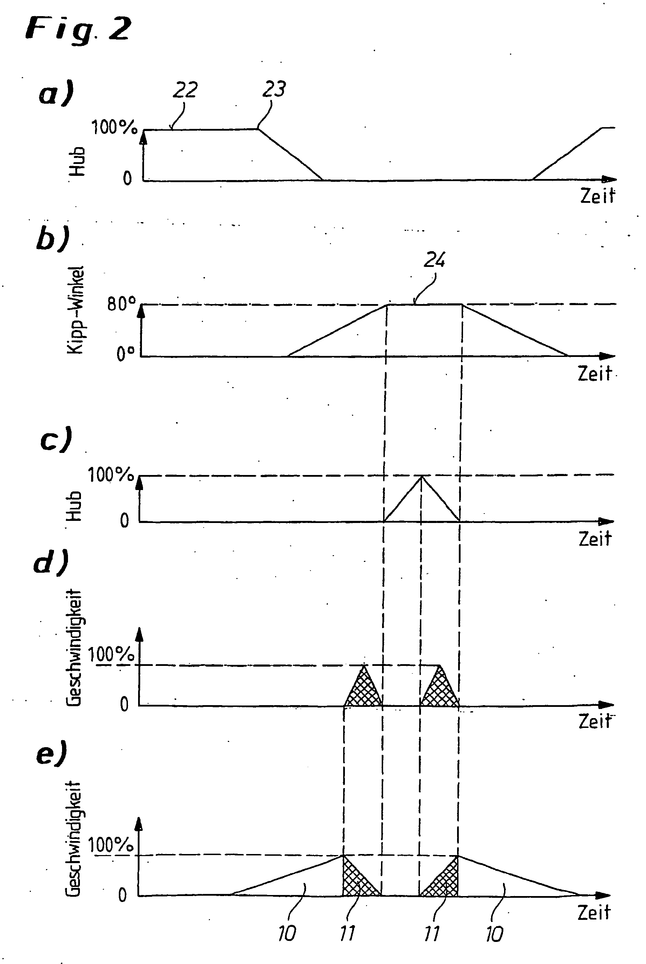

In Fig. 2 sind verschiedene Bewegungen der Thermoformmaschine 1 sowie der Teile der nachgeschalteten Stapel- und Zählvorrichtung 6 über der Zeit gezeigt, wobei ein kompletter Prozesszyklus dargestellt ist.

Aus Fig. 2a geht zunächst hervor, wie sich das bewegliche Werkzeugteil 4 bewegt. In dem mit der Bezugsziffer 22 bezeichneten Hub ist das Werkzeug 3, 4 geschlossen, d. h. das bewegliche Werkzeugteil 4 befindet sich in Anlage an das ortsfeste Werkzeugteil 3. Zum Zeitpunkt 23 ist der Artikel 2 im Werkzeug 3, 4 gefertigt, und das bewegliche Werkzeugteil 4 beginnt, sich nach unten abzusenken.

Wie aus Fig. 2b gesehen werden kann, beginnt kurz nach der Absenkbewegung des beweglichen Werkzeugteils 4 (zum Zeitpunkt 23) die Schwenkbewegung des Werkzeugteils 4 in die in Fig. 1 dargestellte Position. Diese liegt vor, sobald der Kippwinkel 24 erreicht ist.

Sobald dies der Fall ist, wird das Entformelement 5 (s. Fig. 1) betätigt, wodurch die Artikel 2 aus dem Werkzeugteil 4 ausgestoßen werden. Der Verlauf des Hubs des Entformelements 5 über der Zeit ist der Fig. 2c zu entnehmen.

Wesentlich ist, dass sich die Fangplatte 7 während der Verschwenkbewegung des Werkzeugteils 4 nicht in dem Störbereich befindet, der durch die Verschwenkbewegung dieses Teils definiert wird. Deswegen ist es grundsätzlich notwendig, dass die Fangplatte 7 mit einem Geschwindigkeitsprofil bewegt wird, wie es in Fig. 2d angedeutet ist. D. h. dass die Fangplatte 7 - sobald es die Schwenkposition des Werkzeugteils 4 erlaubt - in Richtung Werkzeug beschleunigt wird, sich dann auf das Werkzeugteil 4 zu bewegt, um die Artikel 2 aus dem Werkzeugteil 4 zu entnehmen. Ist dies geschehen, transportiert die Fangplatte 7 die entnommenen Artikel 2 in Richtung Zwischenpuffer 9, wozu der zweite mit gekreuzten Linien gekennzeichnete Geschwindigkeitsverlauf benötigt wird.

In Fig. 2e ist ein optimiertes Geschwindigkeitsprofil für die Fangplatte 7 skizziert. Dort ist zu sehen, dass die Bewegung der Fangplatte 7 aus zwei Bewegungsabschnitten 10 und 11 besteht, wobei sich der Bewegungsabschnitt 10 durch eine geringere Beschleunigung (weniger steiler Verlauf) im Verhältnis zum Bewegungsabschnitt 11 auszeichnet. Danach wird die Fangplatte 7 während des linken Bewegungsabschnitts 10 langsam in Richtung bewegliches Werkzeugteil 4 beschleunigt und während des linken Bewegungsabschnitts 11 stark abgebremst, bis es in der Entnahmeposition am Werkzeugteil 4 zu liegen kommt. Die Artikel 2 werden hier gegriffen und die Fangplatte 7 anschließend mit relativ großer Beschleunigung gemäß dem rechten Bewegungsabschnitt 11 in Richtung Zwischenpuffer 9 beschleunigt. Damit eine möglichst weiche und ruckfreie Abstapelung der sich in der Fangplatte 7 befindlichen Artikel 2 im Zwischenpuffer 9 ergeben kann, wird die Fangplatte 7 mit relativ geringer negativer Beschleunigung gemäß dem rechten Bewegungsabschnitt 10 abgebremst, so dass die Stapelbildung bei minimalen Verfahrgeschwindigkeiten und somit minimalen Massenkräften erfolgen kann.

Die vorgeschlagene konstante Beschleunigung bzw. Verzögerung gemäß den Bewegungsabschnitten 10 und 11 erweist sich als vorteilhaft, weil auf die Artikel 2 während des Einstapeins im Zwischenpuffer 9 keine Kräfte wirken, die ein Auseinanderfallen des Stapels bedingen würden. Durch den relativ langen Abbremsweg der Fangplatte 7 beträgt die Geschwindigkeit der Fangplatte 7 während des Einstapelns in den Zwischenpuffer 9 nur einen Bruchteil der Geschwindigkeit des sonst üblichen Einstapelantriebs.

Die Thermoformmaschine 1 zeichnet sich also durch einen separaten Einstapelantrieb für die Stapelbildung mittels der Fangplatte 7 aus, die vom Entformelement 5 (Maschinenauswerfer) entkoppelt ist. Die erläuterte Verfahrdynamik des Einstapelantriebs, d. h. der Fangplatte 7, führt zu den beschriebenen Vorteilen.

Die abzustapelnden Artikel 2 werden insgesamt daher sehr schonend behandelt. Durch die geringen Massenkräfte wird es weiterhin möglich, auch sehr schwer stapelbare Artikel 2 zu handhaben.

Beim Einstapeln des Artikels 2 in den Zwischenpuffer 9 bewirkt die kleine, konstante Verzögerung nicht nur eine Stapelbildung ohne ein Auseinanderfallen bzw. Auseinanderrutschen der Artikel 2 am Anfang des Stapels, sondern es wird ebenfalls eine plane koaxiale Anlage von aktuell gestapelten und zuvor gestapelten Artikeln 2 über den gesamten Stapelhub gewährleistet. So wird ein Verspringen der Artikel 2 am Stapelende vermieden.

### Bezugszeichenliste:

- 1: Thermoformmaschine
- 2: stapelfähiger Artikel
- 3, 4: Werkzeug
- 3: ortsfestes Werkzeugteil
- 4: bewegliches Werkzeugteil
- 5: Entformelement
- 6: Stapel- und Zählvorrichtung
- 7: Fangplatte
- 8: Stapelkorb
- 9: Zwischenpuffer
- 10: Bewegungsabschnitt
- 11: Bewegungsabschnitt
- 12: lineare Bahn
- 13: Kunststoff-Folienband
- 14: Transportband
- 15: Übergabeposition
- 16: Entladestation
- 17: Senkhub
- 18: Abschiebeeinheit
- 19: Höhenmaß
- 20: Abschieberstab
- 21: Doppelpfeil
- 22: Hub
- 23: Zeitpunkt
- 24: Kippwinkel

## Patentansprüche

1. Verfahren zum Betreiben einer Thermoformmaschine (1) zum Formen von stapelfähigen Artikeln (2) aus Kunststoff, bei dem in einem Werkzeug (3, 4) gefertigte Artikel (2) mit einem Entformelement (5) aus dem Werkzeug (3, 4) entfernt und einer nachgeschalteten Stapel- und Zählvorrichtung (6) zugeführt werden, wobei die Stapel- und Zählvorrichtung (6) eine Fangplatte (7), mittels der der Abtransport der gefertigten Artikel (2) von der Thermoformmaschine (1) erfolgt, sowie einen Stapelkorb (8) zur Aufnahme gestapelter Artikel (2) vor deren Abtransport aus der Stapel- und Zählvorrichtung (6) aufweist,
**dadurch gekennzeichnet,**
**dass** die Fangplatte (7) im Werkzeug (3, 4) gefertigte Artikel (2) einem Zwischenpuffer (9) zuführt, in dem eine Anzahl gestapelter Artikel (2) angesammelt wird, und dass eine im Zwischenpuffer (9) gewünschte Anzahl gestapelter Artikel (2) intermittierend vom Zwischenpuffer (9) in den Stapelkorb (8) verbracht wird.

2. Verfahren nach Anspruch 1,
**dadurch gekennzeichnet,**
**dass** die Fangplatte (7) jeweils nur die in einem einzigen Fertigungszyklus der Thermoformmaschine (1) hergestellten Artikel (2) dem Zwischenpuffer (9) zuführt.

3. Verfahren nach Anspruch 1 oder 2,
**dadurch gekennzeichnet,**
**dass** vor dem Entfemen des Artikels (2) aus dem Werkzeug (3, 4) ein Teil (4) des Werkzeugs (3, 4), insbesondere ein Unterwerkzeugteil, um einen vorgegebenen Winkel in eine der Fangplatte (7) zugestellte Position geschwenkt wird.

4. Verfahren nach Anspruch 3,
**dadurch gekennzeichnet,**
**dass** die Bewegung der Fangplatte (7) zur Öffnungs- und Schließhubbewegung des Werkzeugs (3, 4) sowie zur Schwenkbewegung des einen Teils (4) des Werkzeugs (3, 4) synchronisiert erfolgt.

5. Verfahren nach einem der Ansprüche 1 bis 4,
**dadurch gekennzeichnet,**
**dass** die Bewegung der Fangplatte (7) von der dem Werkzeug (3, 4) zugeordneten Position zu der dem Zwischenpuffer (9) zugeordneten Position in zwei Bewegungsabschnitte (10, 11) mit unterschiedlichen Beschleunigungen oder Verzögerungen unterteilt wird.

6. Verfahren nach Anspruch 5,
**dadurch gekennzeichnet,**
**dass** die beiden Bewegungsabschnitte (10, 11) der Fangplatte (7) jeweils mit einer konstanten Beschleunigung oder Verzögerung durchfahren werden.

7. Thermoformmaschine (1) mit einer nachgeschalteten Stapel- und Zählvorrichtung (6) zum Formen und Abtransportieren von stapelfähigen Artikeln (2) aus Kunststoff, wobei die Thermoformmaschine (1) ein Werkzeug (3, 4) aufweist, das mit einem Entformelement (5) für gefertigte Artikel (2) aus dem Werkzeug (3, 4) versehen ist, und wobei die Stapel- und Zählvorrichtung (6) eine Fangplatte (7), mit der gefertigte Artikel (2) aus der Thermoformmaschine (1) abgeführt werden können, sowie einen Stapelkorb (8), der zur Aufnahme einer Anzahl gestapelter Artikel (2) geeignet ist, aufweist,
**gekennzeichnet durch**
einen Zwischenpuffer (9) für die Aufnahme einer Anzahl gestapelter Artikel (2), der zwischen Fangplatte (7) und Stapelkorb (8) angeordnet ist.

8. Thermoformmaschine nach Anspruch 7,
**dadurch gekennzeichnet,**
**dass** der Zwischenpuffer (9) ortsfest angeordnet ist und Bewegungsmittel zur translatorischen Bewegung von Fangplatte (7) und Stapelkorb (8) vorhanden sind.

9. Thermoformmaschine nach Anspruch 7 oder 8,
**dadurch gekennzeichnet,**
**dass** die Fangplatte (7), der Zwischenpuffer (9) und der Stapelkorb (8) auf einer linearen Bahn (12) angeordnet sind.

## Claims

1. A method for operating a thermoforming machine (1) for forming stackable articles (2) made of plastic, wherein finished articles (2) in a tool (3, 4) are removed from the tool (3, 4) using a demoulding element (5) and supplied to a subsequently positioned stacking and counting device (6), wherein the stacking and counting device (6) comprises a collecting plate (7) by which means the finished articles (2) are moved away from the thermoforming machine (1) and a stacking basket (8) for receiving stacked articles before they are moved away from the stacking and counting device (6), **characterised in that** the collecting plate (7) in the tool (3, 4) supplies finished articles (2) to an intermediate buffer (9) in which a number of stacked articles (2) is collected and that a desired number of stacked articles (2) in the intermediate buffer (9) is intermittently transferred from the intermediate buffer (9) to the stacking basket (8).

2. The method according to claim 1, **characterised in that** in each case, the collecting plate (7) only supplies the articles (2) produced in a single production cycle of the thermoforming machine (1) to the intermediate buffer (9).

3. The method according to claim 1 or claim 2, **characterised in that** before removal of the article (2) from the tool (3, 4), a part (4) of the tool (3, 4), in particular a lower tool part, is swivelled by a predetermined angle into a position associated with the collecting plate (7).

4. The method according to claim 3, **characterised in that** the movement of the collecting plate (7) is synchronised with the opening and closing lifting movement of the tool (3, 4) and with the swivelling movement of one part (4) of the tool (3, 4).

5. The method according to any one of claims 1 to 4, **characterised in that** the movement of the collecting plate (7) from the position associated with the tool (3, 4) to the position associated with the intermediate buffer (9) is divided into two movement sections (10, 11) with different accelerations or delays.

6. The method according to claim 5, **characterised in that** the two movement sections (10, 11) of the collecting plate (7) are each passed through with a constant acceleration or delay.

7. A thermoforming machine (1) comprising a subsequently positioned stacking and counting device (6) for forming and removing stackable articles (2) made of plastic, wherein the thermoforming machine (1) comprises a tool (3, 4) which is provided with a demoulding element (5) for finished articles (2) from the tool (3, 4) and wherein the stacking and counting device (6) comprises a collecting plate (7) whereby the finished articles (2) can be removed from the thermoforming machine (1), and a stacking basket (8) which is suitable for receiving a number of stacked articles (2), **characterised by** an intermediate buffer (9) for receiving a number of stacked articles (2) which is disposed between the collecting plate (7) and the stacking basket (8).

8. The thermoforming machine according to claim 7, **characterised in that** the intermediate buffer (9) is arranged in a fixed position and movement means are provided for the translational movement of the collecting plate (7) and stacking basket (8).

9. The thermoforming machine according to claim 7 or claim 8, **characterised in that** the collecting plate (7), the intermediate buffer (9) and the stacking basket (8) are arranged on a linear track (12).

## Revendications

1. Procédé d'utilisation d'une machine de thermoformage (1) pour le formage d'articles empilables (2) en matière plastique, dans lequel des articles (2) fabriqués dans un outillage (3, 4) sont retirés de l'outillage (3, 4) à l'aide d'un élément de démoulage (5) et acheminés vers un dispositif d'empilement et de comptage monté en aval (6), le dispositif d'empilement et de comptage (6) comportant un plateau récupérateur (7) permettant d'évacuer les articles finis (2) de la machine de thermoformage (1) ainsi qu'un panier d'empilement (8) destiné à recevoir les articles empilés (2) avant leur évacuation du dispositif d'empilement et de comptage (6),
**caractérisé en ce que**
le plateau récupérateur (7) achemine les articles finis (2) vers un accumulateur intermédiaire (9) où sont regroupés un certain nombre d'articles empilés (2) et qu'un nombre désiré d'articles empilés (2) dans l'accumulateur intermédiaire (9) sont amenés par intermittence de l'accumulateur intermédiaire (9) vers le panier d'empilement (8).

2. Procédé selon la revendication 1,
**caractérisé en ce que**
le plateau récupérateur (7) n'achemine respectivement vers l'accumulateur intermédiaire (9) que les articles (2) fabriqués en un seul cycle de fabrication de la machine de thermoformage (1).

3. Procédé selon la revendication 1 ou 2,
**caractérisé en ce que**,
avant de retirer l'article (2) de l'outillage (3, 4), on fait pivoter une partie (4) de l'outillage (3, 4), notamment une partie inférieure de l'outillage, suivant un angle prédéterminé vers une position assignée au plateau récupérateur (7).

4. Procédé selon la revendication 3,
**caractérisé en ce que**
le mouvement du plateau récupérateur (7) permettant la course d'ouverture et de fermeture de l'outillage (3, 4) ainsi que le mouvement de pivotement de la partie (4) de l'outillage (3, 4) est réalisé de manière synchronisée.

5. Procédé selon une des revendications 1 à 4,
**caractérisé en ce que**
le mouvement du plateau récupérateur (7) de la position attribuée à l'outillage (3, 4) vers la position attribuée à l'accumulateur intermédiaire (9) se subdivise en deux fractions de mouvement (10, 11) à accélérations ou décélérations différentes.

6. Procédé selon la revendication 5,
**caractérisé en ce que**
les deux fractions de mouvement (10, 11) du plateau récupérateur (7) sont parcourues respectivement avec une accélération ou décélération constante.

7. Machine de thermoformage (1) à dispositif d'empilement et de comptage monté en aval (6) pour le formage et l'évacuation d'articles empilables (2) en matière plastique, cette machine de thermoformage (1) comportant un outillage (3, 4) qui est équipé d'un élément de démoulage (5) des articles finis (2) hors de l'outillage (3, 4) et le dispositif d'empilement et de comptage (6) comportant un plateau récupérateur (7) permettant d'évacuer les articles finis (2) de la machine de thermoformage (1) ainsi qu'un panier d'empilement (8) qui est destiné à recevoir un certain nombre d'articles empilés (2),
**caractérisé par**
un accumulateur intermédiaire (9) destiné à recevoir un certain nombre d'articles empilés (2) et disposé entre le plateau récupérateur (7) et le panier d'empilement (8).

8. Machine de thermoformage selon la revendication 7,
**caractérisé en ce que**
l'accumulateur intermédiaire (9) est disposé de manière stationnaire et qu'il est prévu des moyens de déplacement assurant le mouvement translatoire du plateau récupérateur (7) et du panier d'empilement (8).

9. Machine de thermoformage selon la revendication 7 ou 8,
**caractérisé en ce que**
le plateau récupérateur (7), l'accumulateur intermédiaire (9) et le panier d'empilement (8) sont disposés sur une bande linéaire (12).
